# EUROPÄISCHE PATENTSCHRIFT

(11) **EP 3 246 487 B1**
(45) Veröffentlichungstag und Bekanntmachung des Hinweises auf die Patenterteilung: **21.08.2019**
(21) Anmeldenummer: 16179040.7
(22) Anmeldetag: 12.07.2016
(51) Int. Cl.: E04F 11/18, F16B 21/04, F16B 9/02

(54) **HANDLAUF MIT EINDREHBAREM BEFESTIGUNGSGRIFF**
HANDRAIL WITH FIXING HANDLE WHICH CAN BE ROTATED INWARDS
MAIN COURANTE DOTEE D'UNE POIGNEE DE FIXATION A VISSER

(30) Priorität: 17.05.2016 DE 202016003268 U
(43) Veröffentlichungstag der Anmeldung: 22.11.2017
(73) Patentinhaber: TIBU Holztreppenbau, 15938 Drahnsdorf (DE)
(72) Erfinder: Buhl, Steffen, 15938 Drahnsdorf (DE)
(74) Vertreter: Hertin und Partner Rechts- und Patentanwälte PartG mbB

(56) Entgegenhaltungen:
- EP-A1- 0 655 127
- EP-A2- 2 273 036
- DE-A1-102013 110 963
- DE-U1- 29 906 836
- GB-A- 638 730

## Beschreibung

Die Erfindung betrifft einen Handlauf umfassend einen Greifkörper und einen Befestigungsarm, wobei der Befestigungsarm einen Verschlussbolzen aufweist und der Greifkörper ein dazu ausgerichtetes Aufnahmeloch, sodass der Befestigungsarm durch Drehung im Greifkörper fixiert werden kann.

DE 10 2013 110 963 A offenbart einen Handlauf nach dem Oberbegriff der Ansprüche 1 und 2.

### Hintergrund und Stand der Technik

Handläufe sind im Stand der Technik bekannt und betreffen im Sinne der Erfindung Festhalte- oder Führungsmöglichkeiten für Personen. Insbesondere betrifft die Erfindung somit das technische Gebiet der Konstruktion von Geländern, wobei der Handlauf in Griffhöhe für Menschen angebracht vorliegt. Handläufe werden bevorzugt an Orten installiert, an denen ein besonders sicherer Halt gewährleistet werden muss. Dies betrifft beispielsweise Treppen, Außenpfade, Terrassen, Transportmittel wie Busse, Schiffe oder Zügen oder Schwimmbäder. In der Regel umfassen Handläufe eine Haltevorrichtung und einen Greifkörper, welcher zumeist stangen- oder rohrförmig ausgebildet ist und sich zum Festhalten bzw. Greifen eignet. Mithilfe der Haltevorrichtung können Handläufe beispielswänden an Wänden oder Geländerkörpern befestigt werden. Aufgrund ihres Verwendungszweckes zur Gewährleistung eines sicheren Halts für Personen müssen Handläufe hohen Anforderungen in Bezug auf Stabilität und Belastbarkeit genügen. Im Stand der Technik sind zwei Montagemöglichkeiten der Haltevorrichtung an dem Greifkörper verbreitet.

Zum einen wird die Haltevorrichtung mit dem Greifkörper direkt verschweißt und somit stoffschlüssig verbunden. Nachteilig an dieser Variante ist das aufwändige Herstellungsverfahren. Dies betrifft insbesondere dass Verschweißen, da die Schweißverbindung hohen Belastungen standhalten muss. Weiterhin ist es nachteilig, dass eine Reinigung des fertiggestellten Handlaufes nach dem Verschweißen nur manuell möglich ist. Dies erhöht den Zeit- und Kostenaufwand der Herstellung dieser Handläufe erheblich. Zudem mindert die sichtbare Schweißnaht den optischen Eindruck des Handlaufes und kann darüber hinaus die Handhabung beeinträchtigen.

Zum anderen ist es bekannt die Haltevorrichtung mit dem Greifkörper fest zu verschrauben. Hierzu weisen bekannte Haltevorrichtungen an einem Ende eine Platte mit zumeist vier Bohrungen auf, um die Haltevorrichtung mit Hilfe von entsprechend vier Schrauben an dem Greifkörper zu installieren. Hierbei wirkt sich die Erhebung der Platte negativ auf den ästhetischen Eindruck wie auch die Handhabung des Handlaufes aus. Insbesondere kann es beim Gleiten der Hand über den Greifkörper zu Verletzungen an den Kanten der Platte kommen. Zumeist wird weiterhin diese Variante des Handlaufes bereits in der Fabrik vorinstalliert. Hierdurch ergibt sich wie im Falle des Verschweißens die Notwendigkeit einer aufwändigen manuellen Endreinigung vor der Auslieferung, welche die Herstellungskosten erhöht. Aus diesem Grund werden verschraubare Handläufe auch separate an die Kunden geliefert, sodass die Montage durch den Kunden erfolgt. Dabei kann es zu Montagefehlern oder aber einer nicht optimalen Befestigung der Haltevorrichtung an dem Greifkörper kommen. Insbesondere besteht die Gefahr, dass durch ein verbleibendes Spiel zwischen der Haltevorrichtung und dem Greifköper die Stabilität des Handlaufes komprimiert wird. Dies führt insbesondere bei Personen mit gesteigerten Sicherheitsbedürfnis wie beispielsweise Senioren zu einer erhöhten Unsicherheit.

Aufgabe der Erfindung war es somit eine Handlauf bereitzustellen, welcher die Nachteile des Standes der Technik beseitigt und insbesondere eine sichere und einfache Montagemöglichkeit der Haltevorrichtung an dem Greifkörper bereitstellt.

### Zusammenfassung der Erfindung

Die Aufgabe der Erfindung wird durch einen Handlauf gemäß einem der unabhängigen Ansprüche gelöst. Die abhängigen Ansprüche betreffend bevorzugte Ausführungsformen der Erfindung. In einer bevorzugten Ausführungsform betrifft die Erfindung einen Handlauf umfassend einen Greifkörper und eine Haltevorrichtung, wobei die Haltevorrichtung einen Befestigungsarm umfasst, an dessen einem Ende ein Verschlussbolzen angebracht vorliegt und der Greifkörper ein Hohlkörper ist, welcher ein zu dem Verschlussbolzen ausgerichtetes Aufnahmeloch aufweist, so dass der Befestigungsarm in den Greifkörper durch Drehung fixierbar ist.

Der erfindungsgemäße Handlauf gehört zu der Gattung der Handläufe, welche im Stand der Technik hinreichend bekannt sind. Dabei weist der Handlauf einen Greifkörper und eine Haltevorrichtung auf. Bevorzugt ist der Greifkörper ein rohr-oder stangenförmiger Körper, welche als Hohlkörper ausgestaltet ist. Im Sinne der Erfindung wird die äußere Wand des Greifkörpers bevorzugt als Mantel oder Außenwand bezeichnet und der Hohlraum des Greifkörpers als Innenraum, wobei die Innenfläche des Mantels dem Hohlraum zugewandt ist. Der Greifkörper weist einen Querschnitt auf, dessen Dimension an die Größe einer menschlichen Hand angepasst ist, um eine angenehmes Greifen zu ermöglichen. Dementsprechend ist es bevorzugt, dass der Greifkörper eine Querschnittsdimension zwischen 2,5 cm oder 10 cm aufweist. Die Form des Greifkörpers kann dabei unterschiedlich ausgestaltet sein, so kann es bevorzugt sein dass der Greifkörper eine runde zylinderförmiger Form aufweist. Es kann aber auch bevorzugt sein, dass der Greifkörper quaderförmiger ist oder eine dreieckige Querschnittsform besitzt. Im Sinne der Erfindung bezeichnet die Querschnittsdimension bevorzugt eine charakteristische Ausdehnung entlang des Querschnittes. Für einen zylindrischen Greifkörper besitzt der Querschnitt eine kreisförmige Form, sodass die Querschnittsdimension bevorzugt dem Durchmesser des Kreises entspricht. Andererseits ist für einen quaderförmigen Greifkörper mit einem quadratischen Querschnitt die Querschnittsdimension bevorzugt gleich der Seitenlänge des Quadrates. Die Ausdehnung des Kreiskörpers entlang der Länge ist bevorzugt deutlich größer d.h. mindestens um das Fünffache, bevorzugt mindestens um das Zehnfache größer als die Querschnittsdimensionen.

Erfindungsgemäß kann der Greifkörper mithilfe einer Haltevorrichtung an einer Wand oder einer anderen tragenden Konstruktion befestigt werden. So ist es vorgesehen, dass der Handlauf mit Hilfe der Haltevorrichtung an einer Wand oder Geländerkonstruktion bevorzugt in Greifhöhe für Menschen angebracht wird. Dadurch kann der Handlauf als Absicherungs-, Führungs- oder Haltemöglichkeit für Personen dienen. Im Sinne der Erfindung bezeichnet eine Haltevorrichtung eine mechanische Konstruktion, welche die Verbindung zwischen dem Greifkörper und einer Wand oder einen anderen tragenden Konstruktion vermitteln kann. Die Haltevorrichtung umfasst bevorzugt einen Befestigungsarm und einen Verschlussbolzen. Der Befestigungsarm ist bevorzugt so ausgestaltet, dass dieser eine ausreichend hohe mechanische Last aufnehmen kann, um das Gewicht des Greifkörpers und sich an dem Greifkörper festhaltenden Personen zu tragen. Zu diesem Zweck ist es bevorzugt, dass die Haltevorrichtung an der vom Greifkörper abgewandten Seite eine Montagevorrichtung aufweist, mit welcher die Haltevorrichtung zum Beispiel an eine Wand geschraubt werden kann.

Durch die Ausgestaltung der Haltevorrichtung als Befestigungsarm umfassend einen Verschlussbolzen, ist es vorteilhafterweise möglich, die Haltevorrichtung durch eine Drehbewegung in den Greifkörper einzusetzen und zu fixieren. Hierzu weist der Greifkörper ein Aufnahmeloch auf. Das Aufnahmeloch entspricht dabei bevorzugt einem Durchbruch in der Außenwand, d.h. des Mantels des Greifkörpers, und ist der Form nach an den Verschlussbolzen angepasst. Vorteilhafterweise kann das Aufnahmeloch durch beispielsweise eine Fräsmaschine in den Greifkörper eingebracht werden.

Im Gegensatz zum bekannten Stand der Technik kann dadurch eine besonders einfache Montagemöglichkeit der Haltevorrichtung an dem Greifkörper bereitgestellt werden. Dies führt zu einer Reihe von überraschenden Vorteile. So ist es zum einen möglich den Greifkörper und die Haltevorrichtung separat herzustellen und auszuliefen. Aufgrund der einfachen und sicheren Montagemöglichkeit kann der Kunde anschließend das Befestigen der Haltevorrichtung an dem Greifkörper in wenigen Handschritten selbst vornehmen. Im Stand der Technik wird oftmals die Haltevorrichtung mit dem Kreiskörper direkt verschweißt. Vor dem Ausliefern des verschweißen Handlauf ist eine Reinigung erforderlich, um dem Endkunden ein optisch ansprechbares Produkt zur Verfügung zu stellen. Dies ist insbesondere dann notwendig, wenn Edelstahl oder andere Metalle für den Handlauf verwendet werden. Die Reinigung eines verschweißten Handlaufes ist nicht maschinelle möglich. Vielmehr muss bei diesen Handlauf das Aufreinigung und Polieren manuelle durch zusätzliches Personal erfolgen und ist daher zeit- und kostenintensiv. Vorteilhafterweise wird durch den eindrehbar ausgestalteten Befestigungsarm die Reinigung besonders einfach, da der Greifkörper und die Haltevorrichtung separat vorliegen. Der Greifkörper, welcher beispielsweise als stangenförmiges Rohr ausgestaltet ist, kann maschinell effizient und kostengünstig poliert werden. Vorteilhafterweise beeinträchtigt das Aufnahmeloch die Reinigungsschritte nicht. Durch die Versendung des Greifkörpers und der Haltevorrichtung als separate - später vom Endkunden montierbare Bauteile - kann das Verpackungsvolumen und somit Transportkosten deutlich eingespart werden. Durch die Ausgestaltung des erfindungsgemäßen Handlaufes kann die Montage durch den Kunden nicht nur schnell - durch eine einfache Drehbewegung - sondern zudem besonders sicher erfolgen. Weiterhin ermöglicht die Montagemöglichkeit einen flexiblen Einsatz der Handläufe. Beispielsweise können die Handläufe auch im montierten Zustand an der Wand durch einfache Handgriffe abmontiert werden und an anderer Stelle installiert werden. Dies ist insbesondere dann von Vorteil, wenn der Handlauf nur vorübergehend oder an wechselnden Positionen beispielsweise auf Veranstaltung eingesetzt wird.

In einer bevorzugten Ausführungsform der Erfindung umfasst der Verschlussbolzen einen Bolzenschaft, an welchem zwei Querstifte bevorzugt seitlich diametral angebracht vorliegen und das Aufnahmeloch weist zwei Passnuten für die Querstifte auf.

Es war überraschend, dass ein Verschlussbolzen umfassend einem Bolzenschaft mit bevorzugt diametral ausgerichteten Querstiften eine besonders stabile Verbindung zwischen der Haltevorrichtung und dem Greifkörper bereitstellen kann. Im Sinne der Erfindung ist der Bolzenschaft bevorzugt zylinderförmig. Im Sinne der Erfindung entsprechen die zwei Querstifte bevorzugt, zwei stiftförmige Ausstülpungen an den Seiten des Bolzenschaftes. Dies kann durch separate Querstifte erreicht werden. Erfindungsgemäß können die zwei Querstifte jedoch auch durch einen einzigen Stift bereitgestellt werden, welcher durch den Bolzenschaft geführt wird und diesen auf beiden Seiten überragt. Die Bezeichnung der zwei Querstifte bezieht sich somit auf zwei seitliche Vorsprünge an dem Bolzenschaft unabhängig davon ob die Querstifte aus einem Stück oder zwei Stücken gefertigt sind. Es kann bevorzugt sein, dass zwei separate Querstifte an der äußeren Seite des Bolzenschaftes angebracht vorliegen oder aber ein Stift durch den Bolzenschaft geführt vorliegt und somit zwei überragende Querstifte bildet. Zur Befestigung der Haltevorrichtung an dem Greifkörper kann der Verschlussbolzen in die das Aufnahmeloch eingeführt werden, wobei die Passnuten des Aufnahmeloches zu den Querstiften ausgerichtet sind. Zur Montage der Haltevorrichtung an dem Greifkörper wird der Verschlussbolzen derart einsetzt, dass die Querstifte durch die Passnuten geführt werden, so dass der vordere Abschnitt des Bolzenschaftes umfassend die Querstifte im Innenraum des Greifkörpers vorliegt. Vorteilhafterweise ist es nunmehr durch ein einfaches Verdrehen des Befestigungsarms möglich eine kraft und/oder formschlüssige Verbindung zwischen der Haltevorrichtung und dem Greifkörper zu erreichen. Während des Verdrehens bewegen sich die Querstifte auf der Innenfläche des Mantels des Greifkörpers, wodurch der Mantel zwischen dem Befestigungsarm und den Querstiften eingefasst wird. Das Verdrehen resultiert somit vorteilhafterweise in einer durch den Verschlussbolzen vermittelten Zugkraft zwischen dem Befestigungsarm und dem Greifkörper.

In einer bevorzugten Ausführungsform der Erfindung ist der Greifkörper ein zylinderförmiger Hohlkörper. Diese bevorzugte Ausführungsform ist besonders vorteilhaft für verschiedene Verwendungszwecke des Handlaufes, da ein zylinderförmiger Greifkörper angenehm in der Hand liegt und einen stabilen Griff ermöglicht.

In einer weiteren bevorzugten Ausführungsform der Erfindung ist der Greifkörper ein quaderförmiger Hohlkörper. Vorteilhafterweise kann durch die kantige Ausgestaltung des Greifkörpers das Greifempfinden gesteigert und ein besonders guter Halt vermittelt werden. Im Sinne der Erfindung sind darüber hinaus auch andere Formen für den Greifkörper denkbar. Bevorzugt sind ergonomische Formen, welche an die Griffhaltung der menschlichen Hand angepasst sind.

In einer weiteren bevorzugten Ausführungsform der Erfindung weist das Aufnahmeloch zwei Durchbohrungen auf, wobei die Querstifte des Verschlussbolzens nach Einsatz des Verschlussbolzens in das Aufnahmeloch durch Drehung des Befestigungsarmes in den Durchbohrungen einrasten. In dieser bevorzugten Ausführungsform weist das Aufnahmeloch bevorzugt Passnuten für die Querstifte auf, sowie mindestens zwei Durchbohrungen, welche bevorzugt diametral zueinander ausgerichtet sind. Es ist besonders bevorzugt, dass die Durchbohrungen wie auch die Passnuten diametral zueinander ausgerichtet sind, wobei die Verbindungslinie zwischen den Durchbohrungen und dem Passnuten bevorzugt ein rechtwinkliges Kreuz bilden. Bevorzugt weisen die Durchbohrungen einen Durchmesser auf, welcher an die Ausdehnung der Querstifte angepasst ist. So kann es bevorzugt sein dass die Querstifte einen Durchmesser von 2 mm aufweisen. In diesem Fall sind die Durchbohrungen bevorzugt ungefähr halb so groß und haben einen Durchmesser von ungefähr 1 mm. Im Sinne der Erfindung wird mit den Bezeichnungen "nahezu" oder "ungefähr" bevorzugt eine Toleranzspanne von ±20% bevorzugt von ±10% verstanden. Im Sinne der Erfindung sind die Durchbohrungen bevorzugt Durchbrüche der äußeren Wand, d.h. des Mantels des Greifkörpers, welche beispielsweise durch ein Bohren erreicht werden können. Dadurch liegt auf der Innenfläche des Mantels des Greifkörpers Ausnehmungen vor, welche passend zu den Querstiften ausgestaltet sind. Zur Montage des Haltekörpers an den Greifkörper kann bevorzugt der Verschlussbolzen so eingesetzt werden, dass die Querstifte durch die Passnuten in den Hohlraum eingeführt werden. Bei einer Drehung der Haltevorrichtung werden die Querstifte entlang der Innenfläche des Mantels geführt und treffen vorteilhafterweise nach einer vorgegeben Drehung auf die durch die Durchbohrungen bereitgestellten Ausnehmungen. Hierdurch kommt es zu einer Arretierung der Querstifte in den Durchbohrungen, welches ein Verrutschen der Querstifte vermeidet. Das Zusammenwirken der Querstifte in den Durchbohrungen wird erfindungsgemäß bevorzugt als ein "Einrasten" bezeichnet. Im Falle des Vorliegens der Durchbohrungen und Passnuten als rechtwinkligem Kreuz wird das Einrasten nach einer 90° Drehung bewirkt. In dieser bevorzugten Ausführungsform ist es daher vorteilhafterweise möglich durch eine einfache Vierteldrehung des Verschlussbolzen und des Befestigungsarms die Haltevorrichtung in dem Greifkörper einrasten zu lassen. Es kann auch bevorzugt sein, dass die Passnuten und die Durchbohrungen eine Anordnung aufweisen, so dass ein Einrasten nach einer Drehung von ungefähr 90° erfolgt. Eine Drehung von ungefähr 90° umfasst bevorzugt Drehungen um 75° - 105°, bevorzugt Drehungen um 85° - 95° und wird bevorzugt ebenso als Vierteldrehung bezeichnet. Diese Montagemöglichkeit ist zum einen einfach durchzuführen und führt zum anderen zu überraschend kontinuierlichen und wiederholbaren Erfolg. Das durch die Durchbohrungen ermöglichte Einrasten der Querstifte sorgt insbesondere bei zylinderförmigen Greifkörper zu einer besonders stabilen Verbindung. Aufgrund der inneren Wölbung des zylinderförmigen Greifkörpers wird im Falle des Einrastens der Querstifte in den Durchbohrungen eine erhöhte Zugkraft zwischen den Querstiften und dem Greifkörper vermittelt. Dies sorgt für eine besonders stabile Verbindung zwischen der Haltevorrichtung und dem Greifkörper.

In einer bevorzugten Ausführungsform der Erfindung weist der Verschlussbolzen eine Federscheibe auf, welche um den Bolzenschaft zwischen den Querstiften dem Befestigungsarm angebracht vorliegt. Im Sinne der Erfindung bezeichnet eine Federscheibe bevorzugt einen scheibenförmigen Ring, welche eine Elastizität entlang der axialen Richtung der Schreibe aufweist. Somit kann die Federscheibe bevorzugt entlang ihrer axialen Ausdehnung eingedrückt, wobei diesem Eindrücken eine durch die Elastizität bestimmte Federkraft entgegenwirkt. Im Sinne der Erfindung kann der Begriff Federscheiben beispielsweise wellenförmig Ringscheiben oder spiralförmige Federn in Form einer Ringscheibe umfassen. Bevorzugt sind die Federscheiben aus Metall. Durch die Federscheibe kann vorteilhafterweise eine erhöhte Zugkraft zwischen dem Befestigungsarm und dem Greifkörpers vermittelt werden. So wird beim Einsetzen des Verschlussbolzens mit den Querstiften durch die Passnuten zunächst die Federscheibe eingedrückt. Anschließend wird bevorzugt eine Drehbewegung des Befestigungsarmes ausgeführt, sodass die Querstifte auf der Innenfläche des Mantels des Greifkörpers geführt werden. Nach dieser Drehbewegung vermittelt die Federscheibe eine Druckkraft zwischen dem äußeren Mantelfläche des Greifkörpers und dem Befestigungsarm. Dadurch werden wiederum die Querstifte auf der Innenfläche des Mantels des Greifkörpers fest gezogen an diesen gezogen. Die dadurch bereitgestellte zusätzliche Zugkraft zwischen dem Befestigungsarm und dem Greifkörper vermittelt einen besonders stabilen Halt. Vorteilhafterweise erhöht die Federscheibe die Druckspannungen und ermöglicht einen effektiven Ausgleich von Materialtoleranzen. Die Verwendung einer Federscheibe wirkt sich besonders bevorzugt für die Ausführungsform aus, in welcher das Aufnahmeloch Durchbohrungen für das Einrasten der Querstifte aufweist. Hierbei kann, je nach Anordnung der Passnuten und Durchbohrungen, beispielsweise durch eine Vierteldrehung des Verschlussbolzens ein Einrasten der Querstifte in den Durchbohrungen vermittelt werden. Aufgrund der durch die Federscheibe bewirkten Zugkraft wird das Einrasten unterstützt und die Querstifte sind besonders stabil in dem eingerasteten Zustand fixiert. Ein Entgleiten der Querstifte aus den Durchbohrungen kann dadurch besonders wirksam vermieden werden. In einer bevorzugten Ausführungsform der Erfindung weist der Bolzenschaft einen Durchmesser von 3 - 11 mm, die Querstifte eine Länge von 1 -5 mm und einen Durchmesser von 1- 6 mm auf. Es war überraschend, dass mit der vorgenannten Dimensionierung des Bolzenschaftes und der Querstifte eine besonders stabile Verbindung zwischen dem Befestigungsarm und dem Greifkörper bereitgestellt werden kann. So vermeiden Querstifte einer Länge von 1 -5 mm und eines Durchmesser von 1- 6 mm auf besonders effektive Weise ein Verkippen des Greifkörpers gegenüber dem Befestigungsarm. Im Sinne der Erfindung bezeichnet die Länge der Querstifte bevorzugt die Ausdehnung der Querstifte, wie sie über die Oberfläche des Bolzenschaftes seitlich hinausragen. Es kann bevorzugt sein, separate Querstifte an dem Bolzenschaft zu befestigen, welche jeweils eine Länge von 1 - 3 mm aufweisen. Es kann aber auch bevorzugt sein einen Stift zu nutzen, um zwei Querstifte zu bilden. Beispielsweise kann der Bolzenschaft einen Durchmesser von 5 mm aufweisen, durch welchen ein Stift einer Gesamtlänge von 9 mm geführt wird. Bei zentrierter Ausrichtung des Stiftes werden im Sinne der Erfindung zwei Querstifte bereitgestellt, welche die Oberfläche des Bolzenschaftes jeweils um eine Länge von 2 mm überragen.

Weiterhin war überraschend, dass ein Bolzenschaft mit einem Durchmesser von 3 - 11 mm hohen Kräfte zwischen dem Greifkörper und der Haltevorrichtung besonders stabil standhält. Insbesondere führen Belastungen von über 1000 Newton bei dem bereitgestellten Verschlussbolzen der vorgenannten Dimensionierung zu keiner Beeinträchtigung der Verbindung. Dabei war es zudem überraschend, dass Querstifte eines Durchmessers von 1 - 6 mm in Relation zu einem Bolzenschaft mit einem Durchmesser von 3 - 11 mm eine derart starke kraft- und/oder formschlüssige Verbindung schafft. So wurde festgestellt dass ein größerer Durchmesser des Bolzenschaftes nicht notwendig ist, um die auftretenden Kräfte im Gebrauch eines Handlaufes aufnehmen zu können. Bei einem Bolzenschaft mit einem größeren Durchmesser wird die Anbringbarkeit in den Aufnahmelöchern komprimiert, sodass die Montage weniger gleichmäßig erfolgen kann. Weiterhin wurde erkannt, dass eine längere Ausdehnung der Querstifte ebenfalls nicht vorteilhaft für die Montage des Befestigungsarmes an dem Greifkörper ist. So wirken sich längere Querstifte negativ auf die Drehbewegung des Befestigungsarmes bei der Montage aus. Dies ist insbesondere für zylinderförmige Greifkörper der Fall, da diese eine starke Wölbung der Innenfläche des Mantels aufweisen können. So wird bei einer längeren Ausdehnung der Querstifte die Drehbewegung aufgrund stark überragenden Stifte beeinträchtigt. Zudem können größer dimensionierte Querstifte überraschenderweise zu einem leichteren Verkippen des Befestigungsarms gegenüber dem Greifkörper führen. Auch kleinere Ausdehnung der Querstifte und des Bolzenschaftes gegenüber den bevorzugt genannten Dimensionierungen können die Kraftübertragung zwischen dem Greifkörper und dem Hohlkörper reduzieren, da in diesen Fällen eine verminderte Zugkraft bereitgestellt wird. Die Dimensionierung der bevorzugten Ausgangsform mit einem Bolzenschaft mit einem Durchmesser von 3 - 11mm und Querstiften mit einer Länge von 1 -5 mm und einem Durchmesser von 1- 6 mm, stellen daher optimierten Parameterbereiche dar, welche sowohl die Montage des Befestigungsarms an den Greifkörper erleichtern, als auch zu einer besonders stabilen Verbindung führen.

In einer bevorzugten Ausführungsform der Erfindung ist der Befestigungsarm eine geradförmige Stange oder ein stangenförmiger Winkel mit einem Durchmesser von 5 - 25 mm. Ein Befestigungsarm mit den vorgenannten Dimensionen erlaubt eine überraschend belastbare Verbindung des Greifkörpers an einer Wand.

In einer bevorzugten Ausführungsform der Erfindung weist der Greifkörper eine Querschnittsdimension von 2,5 - 10 cm auf. Greifkörper mit den vorgenannten Querschnittsdimensionen des Greifkörpers sind besonders geeignet, um eine Festhalte- bzw. Führungsmöglichkeit für Personen bereitzustellen.

In einer bevorzugten Ausführungsform der Erfindung weist der Handlauf mindestens zwei Haltevorrichtungen und der Greifkörper mindestens zwei Aufnahmelöcher auf. Bevorzugte Ausführungsformen der Haltevorrichtungen umfassend Befestigungsarme und Verschlussbolzen sowie dazu ausgerichtete Aufnahmelöcher, welche für einen Handlauf umfassend mindestens eine Haltevorrichtung offenbart wurden, gelten ebenfalls für die Ausführungsform, bei welcher der Handlauf mindestens zwei Haltevorrichtungen umfasst. Durch die Verwendung mindestens zweier Haltevorrichtungen zur Befestigung des Handlaufes beispielsweise an einer Wand, wird eine besonders stabile Montage des Handlaufes ermöglicht. Insbesondere wird durch die Verwendung mindestens zweier Haltervorrichtungen vorteilhafterweise ein Bewegungsspiel des Handlaufes wirksam vermieden. Es ist besonders bevorzugt, dass der Handlauf genau zwei Haltevorrichtungen und der Greifkörper genau zwei Aufnahmelöcher umfasst.

In einer bevorzugten Ausführungsform der Erfindung ist der Handlauf dadurch gekennzeichnet, dass auf der Innenfläche des Mantels des Greifkörpers ein Arretierstift vorliegt und der Bolzenschaft an einem Ende ein Außendrehgewinde und der Befestigungsarm ein dazu passend ausgestaltetes Innendrehgewinde aufweist. In dieser bevorzugten Ausführungsform ist es aufgrund der Drehgewinde vorteilhafterweise möglich eine form- und/oder kraftschlüssigen Verbindung zwischen der Haltevorrichtung und dem Greifkörper zu erreichen. Für diese Ausführungsform ist es besonders bevorzugt, dass der Verschlussbolzen zwei Querstifte aufweist, welche seitlich an dem Bolzenschaft angebracht vorliegen. Passgenau zu diesen Querstiften weist bevorzugt das Aufnahmeloch Passnuten auf. Beim Einsetzen des Verschlussbolzens in den Greifkörper wird der Verschlussbolzen bevorzugt derart positioniert, dass die Querstifte durch die Passnuten geführt werden. Dies erfolgt bis das vordere Ende des Bolzenschaftes umfassend die Querstifte im Innenraum des Greifkörpers vorliegt. Nunmehr kann durch eine Drehung des Befestigungsarmes eine Drehbewegung der Querstifte auf der Innenfläche des Mantels bewirkt werden. Beim Anschlagen einer der Querstifte an dem Arretierstift, wird eine weitere Rotation der Querstifte und somit des Verschlussbolzen verhindert. Da der Verschlussbolzen auf der dem Befestigungsarm zugewandten Seite ein Drehgewinde aufweist, erfolgt nunmehr ein Einschrauben des Verschlussbolzens in den Befestigungsarm. Hierdurch verkürzt sich der Abstand zwischen den Querstiften und dem Befestigungsarm und der Mantel des Greifkörpers wird zwischen diesen Bauelementen vorteilhafterweise eingeklemmt. Durch diese Ausgestaltung kann eine besonders stabile Befestigung der Haltevorrichtung an dem Greifkörper mit einer besonders effizienten und einfachen Bauweise erzielt werden. Diese Ausführungsform ist besonders vorteilhaft für quaderförmigen Greifkörper, welche ebene innere Mantelflächen aufweisen.

In einer weiteren Ausführungsform der Erfindung weist der Arretierstift eine Länge von 1 - 5 mm und einen Durchmesser von 1 - 3 mm auf. Diese Dimensionierung des Arretierstiftes erlaubt ein sichere Fixierung der Querstifte und die Vermittlung einer besonders hohen Zugkraft zwischen dem Greifkörper und dem Befestigungsarm.

In einer weiteren bevorzugten Ausführungsform ist der Greifkörper und der Befestigungsarms aus einem Material gefertigt ausgewählt aus einer Gruppe umfassend Metallelemente, insbesondere Eisen, Aluminium oder Kupfer, und Metalllegierungen, insbesondere Bronze, Messing, oder Stahl, bevorzugt Edelstahl. Diese Materialien weisen eine hohe Beständigkeit und eine ansprechende Optik auf. Aus diesem Grunde sind die vorgenannten Materialien insbesondere für den Greifkörper und den Befestigungsarm geeignet, welche bei dem Handlauf sichtbar sind und ein Großteil der Kraft aufnehmen müssen.

In einer bevorzugten Ausführungsform betrifft die Erfindung weiterhin einen Handlauf, wobei der Verschlussbolzen umfassend Querstifte aus einem Material gefertigt ist ausgewählt aus einer Gruppe umfassend Metallelemente, insbesondere Eisen und Metalllegierungen, insbesondere Stahl, bevorzugt Edelstahl.

Für die Verwendung des Verschlussbolzens eignen sich diese Metalle besonders gut, da diese bei hoher Steifigkeit eine belastbare Verbindung zwischen den Bauteilen erlauben. Diese Materialien sind besonders vorteilhaft im Zusammenhang mit der bevorzugten Dimensionierung des Bolzenschaftes mit einem Durchmesser von 3 - 11 mm und den Querstiften mit einer Länge von 1 - 5 mm und einen Durchmesser von 1 - 6 mm.

Der Begriff Edelstahl umfasst bevorzugt verschiedene Legierungen und Oberflächen. Insbesondere solche Legierungen, welche eine ansprechende Optik und eine hohe Beständigkeit beispielsweise gegenüber Korrosion aufweisen. Beispielsweise können folgenden Legierungen als Edelstahl bevorzugt verwandt werden. Die Legierungen sind nach ihrer Werkstoffnummer (W.-Nr.) gemäß DIN EN 10027-2 sowie in Klammern der DIN Bezeichnung (DIN) gekennzeichnet: W.-Nr. 1400 (DIN X6Cr13), W.-Nr. 14001 (DIN X7Cr14), .-Nr. 1.4002 (DIN X6CrAL13), W.-Nr. 1.4005 (DIN X12CrS13), W.-Nr. 1.4006 (DIN X12Cr13), W.-Nr. 1.4016 (DIN X6Cr17), W.-Nr. 1.4021 (DIN X20Cr13), W.-Nr. 1.4028 (DIN X30Cr13), W.-Nr. 1.4057 (DIN X17CrNi16-2), W.-Nr. 1.4104 (DIN X14CrMoS17), W.-Nr. 1.4113 (DIN X6CrMo17-1), W.-Nr. 1.4125 (DIN X105CrMo17), W.-Nr. 1.4301 (DIN X5CrNi18-10), W.-Nr. 4303 (DIN X4CrNi18-12), W.-Nr. 4305 (DIN X8CrNiS18-9), W.-Nr. 4306 (DIN X2CrNi19-11), W.-Nr. 4307 (DIN X2CrNi18-9), W.-Nr. 1.4310 (DIN X10CrNi18-8), W.-Nr. 1.4311 (DIN X2CrNiN18-10), W.-Nr. 4319 (DIN X3CrNiN17-8), W.-Nr. 1.4372 (DIN X12CrMnNiN17-7-5), W.-Nr. 1.4401 (DIN X5CrNiMo17-12-2), W.-Nr. 4404 (DIN X2CrNiMo17-12-2), W.-Nr. 1.4406 (DIN X2CrNiMoN17-11-2), W.-Nr. 1.4429 (DIN X2CrNiMoN17-13-3), W.-Nr. 1.4435 (DIN X2CrNiMo18-14-3), W.-Nr. 1.4436 (DIN X3CrNiMo17-13-3), W.-Nr. 1.4438 (DIN X2CrNiMo18-15-4), W.-Nr. 1.4439 (DIN X2CrNiMoN17-13-5), W.-Nr. 1.4449 (DIN X3CrNiMo18-12-3), W.-Nr. 1.4460 (DIN X3CrNiMoN27-5-2), W.-Nr. 1.4462 (DIN X2CrNiMoN22-5-3), W.-Nr. 1.4510 (DIN X3CrTi17), W.-Nr. 1.4512 (DIN X2CrTi12), W.-Nr. 1.4521 (DIN X2CrMoTi18-2), W.-Nr. 1.4529 (DIN X1NiCrMoCuN25-20-7), W.-Nr. 1.4539 (DIN X1NiCrMoCuN25-20-5), W.-Nr. 1.4541 (DIN X6CrNiTi18-10), W.-Nr. 1.4542 (X5CrNiCuNb16-4), W.-Nr. 1.4546 (DIN X5CrNiNb18-10), W.-Nr. 1.4550 (DIN X6CrNiNb18-10), W.-Nr. 1.4565 (DIN X2CrNiMnMoNbN25-18-5-4), W.-Nr. 1.4567 (DIN X3CrNiCu18-9-4), W.-Nr. 1.4571 (DIN X6CrNiMoTi17-12-2), W.-Nr. 1. 1.4718 (DIN X45CrSi9-3), W.-Nr. 1.4828 (DIN X15CrNiSi20-12), W.-Nr. 1.4841 (DIN X15CrNiSi25-20), W.-Nr. 4842 (DIN X12CrNi25-20), W.-Nr. 1.4845 (DIN X8CrNi25-21), W.-Nr. 1.4864 (DIN X12NiCrSi35-16) und W.-Nr. 1.4878 (DIN X8CrNiTi18-10).

Im Folgenden soll die Erfindung an Hand von Beispielen näher erläutert werden, ohne auf diese beschränkt zu sein.

### Kurzbeschreibung der Abbildungen

- Fig. 1: Schematische Darstellung einer bevorzugten Ausführungsform des Handlaufes vor der Montage des Befestigungsarmes an einem zylinderförmigen Greifkörper.
- Fig. 2:: Schematische Darstellung einer bevorzugten Ausführungsform des Handlaufes nach der Montage des Befestigungsarmes an einem zylinderförmigen Greifkörper.
- Fig. 3A:: Schematische Darstellung der Vorderansicht einer bevorzugten Ausführungsform der Haltevorrichtung umfassend einen Verschlussbolzen
- Fig. 3B:: Schematische Seitenansicht einer bevorzugten Ausführungsform der Haltevorrichtung umfassend einen Verschlussbolzen
- Fig. 4:: Schematische Darstellung eines zylindrischen Greifkörpers mit Detailansicht des Aufnahmeloches
- Fig. 5:: Schematische Darstellung einer Innenansicht einer bevorzugten Ausführungsform des Handlaufes mit einem zylindrischen Greifkörper
- Fig. 6:: Schematische Darstellung einer bevorzugten Ausführungsform des Handlaufes vor der Montage des Befestigungsarmes an einem quaderförmigen Greifkörper
- Fig. 7:: Schematische Darstellung eines Verschlussbolzens mit einem Außendrehgewinde zum Einschrauben des Verschlussbolzens in den Befestigungsarm
- Fig. 8:: Schematische Darstellung eines quadratischen Greifkörpers mit Detailansicht des Aufnahmeloches
- Fig. 9: Schematische Darstellung einer Innenansicht einer bevorzugten Ausführungsform des Handlaufes mit einem quadratischen Greifkörper

### Detaillierte Beschreibung der Abbildungen

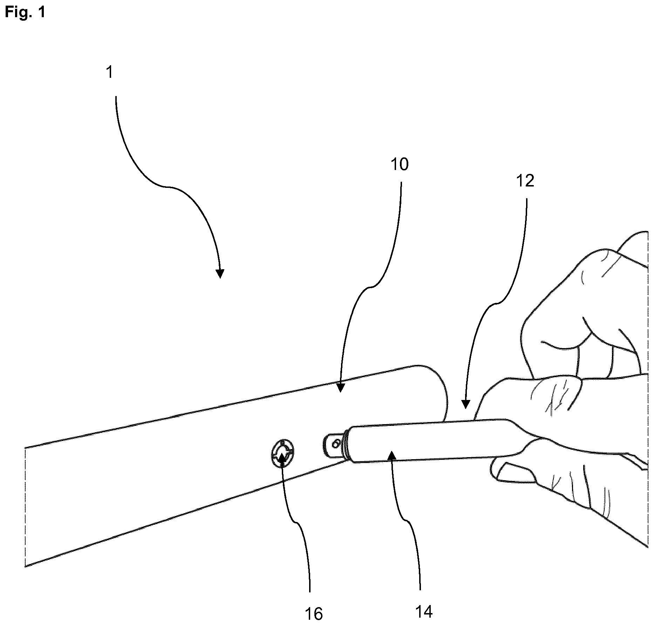

Figur 1 zeigt die schematische Ansicht eines Handlaufes (1) vor der Montage der Haltevorrichtung (12) am Greifkörper (10). Zum Einsetzen der Haltevorrichtung (12) in den Greifkörper (10) wird der Verschlussbolzen (16) in das Aufnahmeloch (18) geführt. Durch Drehung des Befestigungsarmes (14) erfolgt die Fixierung des Befestigungsarmes (14) am Greifkörper (10) des Handlaufes (1).

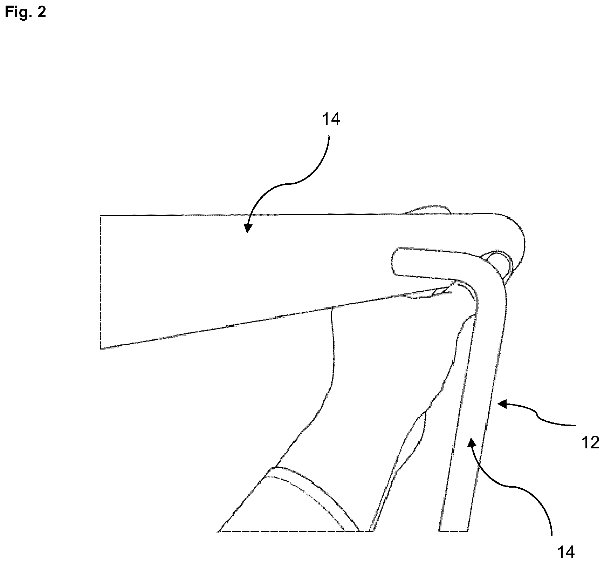

Figur 2 zeigt den Handlauf (1) gemäß Figur 1, wobei der Befestigungsarm (14) in dem Greifkörper (10) durch Drehung fixiert wurde.

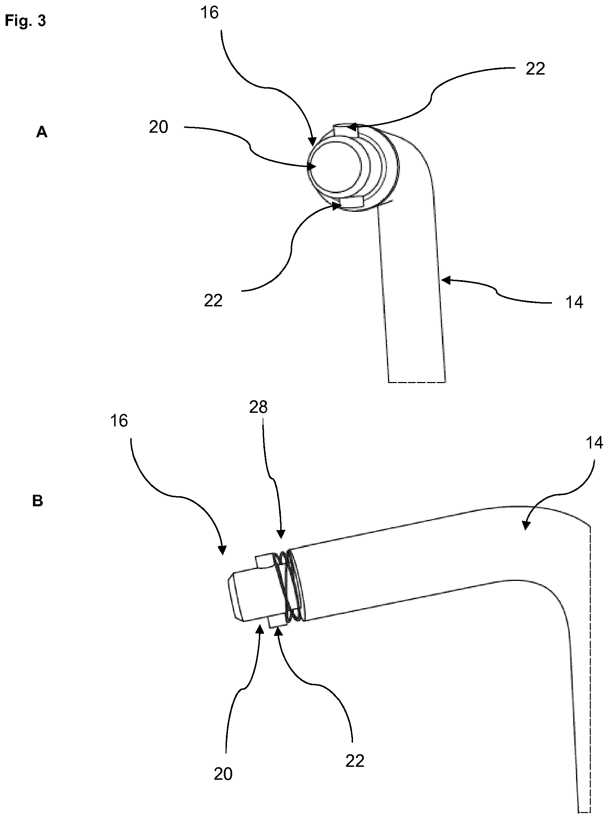

Figur 3 zeigt eine Detailansicht des Verschlussbolzens (16) der Haltevorrichtung (12) aus Figur 1. Figur 3A zeigt dabei die Vorderansicht des Verschlussbolzens (16). Die Querstifte (22) befinden sich seitlich diametral an der Außenfläche des Bolzenschaft (20). In der Seitenansicht Figur 3B ist zu erkennen, dass es bevorzugt sein kann, dass zwischen dem Querstift (22) und dem Befestigungsarm (14) eine Federscheibe (28) vorliegt.

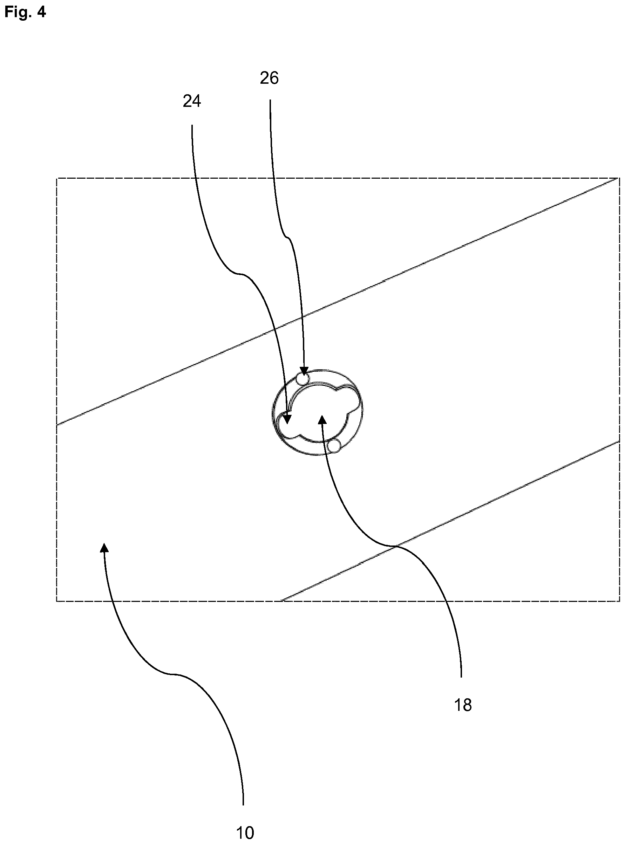

Figur 4 zeigt eine Detailansicht des Aufnahmeloches (18) des Greifkörpers (10) aus Figur 1. Das Aufnahmeloch (18) weist zwei diametral gegenüberliegende Passnuten (24) auf. Die Passnuten (24) haben eine Form und Größe, welche an die Querstifte (22) des Verschlussbolzens (16) der Figur 3 angepasst sind. Der zentrale Teil des Aufnahmeloches (18) hat eine kreisrunde Form, welche an den Außendurchmesser des Bolzenschaftes (20) des Verschlussbolzens (16) der Figur 3 angepasst ist. In diesem Sinne ist das Aufnahmeloch (18) zu der Form des Verschlussbolzens (16) ausgerichtet. Zudem weist das Aufnahmeloch (18) Durchbohrungen (26) auf. Wie in Figur 4 zu erkennen, sind die Passnuten (24) und Durchbohrungen (26) so angeordnet, dass die jeweiligen Verbindungslinien zwischen Passnuten (24) und Durchbohrungen (26) ein rechtwinkliges Kreuz ergeben.

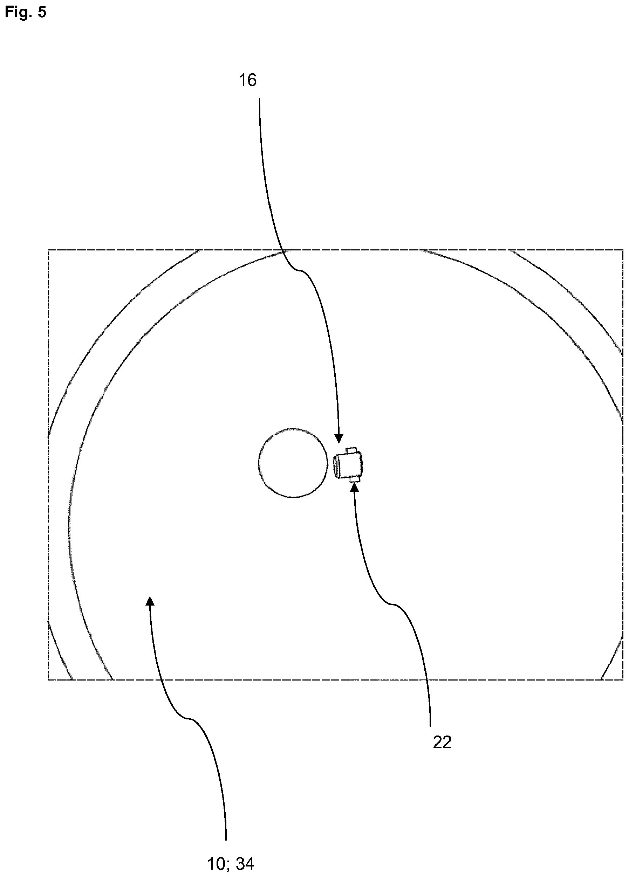

Zum Einsetzen der Haltevorrichtung (12) in den Greifkörper (10) wird der Verschlussbolzen (16) derart positioniert, dass die Querstifte (22) in den Passnuten (24) vorliegen. Durch eine Druckbewegung wird der vordere Teil des Verschlussbolzens (16) umfassend die Querstifte (22) in den Innenraum des Greifkörpers (10) geführt. Dabei ist es bevorzugt, dass wie in Figur 3B gezeigt eine Federscheibe (28) zwischen den Querstiften (22) und dem Befestigungsarm (14) vorliegt. Anschließend kann der Befestigungsarm (14) durch eine Vierteldrehung befestigt werden, wie durch die Figuren 1 und 2 illustriert. Durch die vollzogene Drehbewegung gleiten die Querstifte (22) auf der Innenfläche des Mantels (34) des Greifkörpers (10), bis diese die Durchbohrungen (26) erreichen. In Figur 5 ist eine Innenansicht des Verschlussbolzens (16) umfassend die Querstifte (22) gezeigt, wobei die Querstifte (22) in den Durchbohrungen (26) eingerastet vorliegen. Dies entspricht dem in Figur 2 gezeigten montierten Zustand des Handlaufes (1).

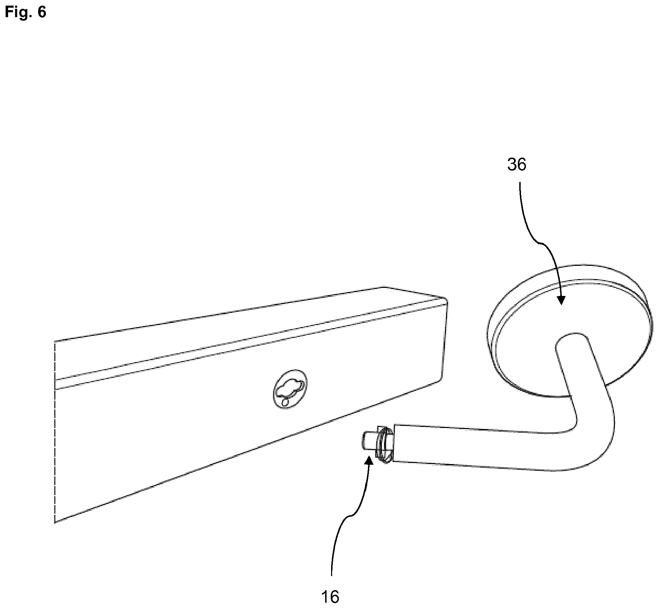

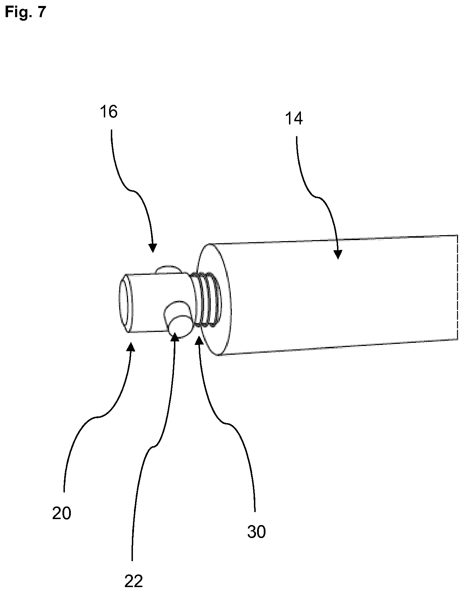

Figur 6 zeigt eine bevorzugte Ausführungsform eines Handlaufes (1) mit einem quaderförmigen Greifkörper (10). Außerdem ist in Figur 6 an der Haltevorrichtung (12) eine Montagevorrichtung (36) gezeigt, mit welcher die Haltevorrichtung (12) beispielsweise an einer Wand befestigt werden kann. Die Montagevorrichtung (36) liegt an dem Ende des Befestigungsarmes (14) angebracht vor, welcher vom dem Greifkörper (10) abgewandt ist. Der Befestigungsarm (14) weist eine winkelförmige Stangenform auf. Die Montage der Haltevorrichtung (12) am Greifkörper (10) erfolgt durch ein Einsetzen des Verschlussbolzens (16) in das zu dem Verschlussbolzen (16) ausgerichtetem Aufnahmeloch (18). Figur 7 zeigt eine Detailansicht des Endes des Befestigungsarmes (14) umfassend einen Verschlussbolzen (16), welcher im montierten Zustand dem Greifkörper (10) zugewandt ist. Wie in Figur 7 erkennbar, umfasst der Verschlussbolzen (16) an dem Ende des Bolzenschaftes (20), welcher dem Befestigungsarm (14) zugewandt ist ein Außendrehgewinde (30) auf. Der Befestigungsarm (14) umfasst ein dazu passendes Innendrehgewinde, welches in der schematischen Ansicht nicht sichtbar ist. Zudem umfasst der Verschlussbolzen (16) Querstifte (22), welche seitlich diametral an dem Bolzenschaft (20) angebracht vorliegen.

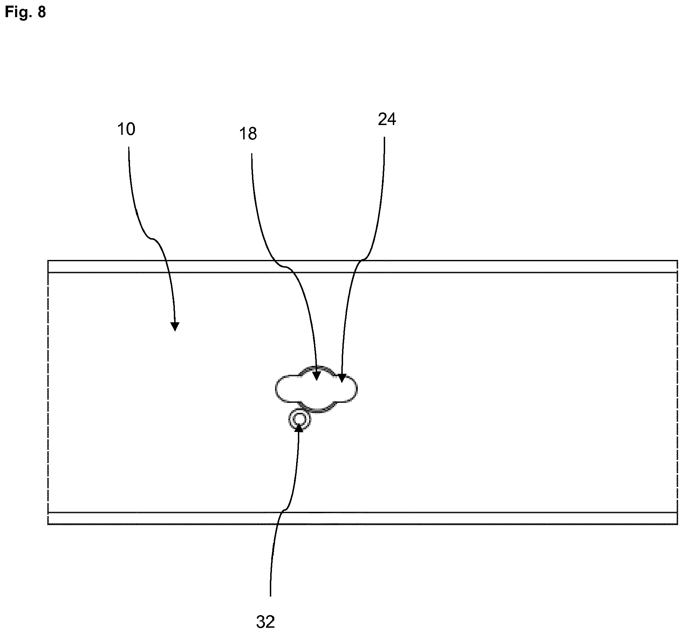

Figur 8 zeigt eine schematische Ansicht des quadratförmigen Greifkörpers (10) aus Figur 6 umfassend ein Aufnahmeloch (18). Das Aufnahmeloch (18) umfasst zwei Passnuten (24), welche diametral zueinander gegenüberliegend ausgerichtet sind. Die Passnuten (24) entsprechen in ihrer Größe und Positionierung den Querstiften (22) des Verschlussbolzens (16). Ebenso entspricht der zentrale Teil des Aufnahmeloches (18) einer kreisrunden Ausnehmung, welche an den Außendurchmesser des Bolzenschaftes (20) angepasst ist. In diesem Sinne ist der Verschlussbolzen (16) auf das Aufnahmeloch (18) ausgerichtet.

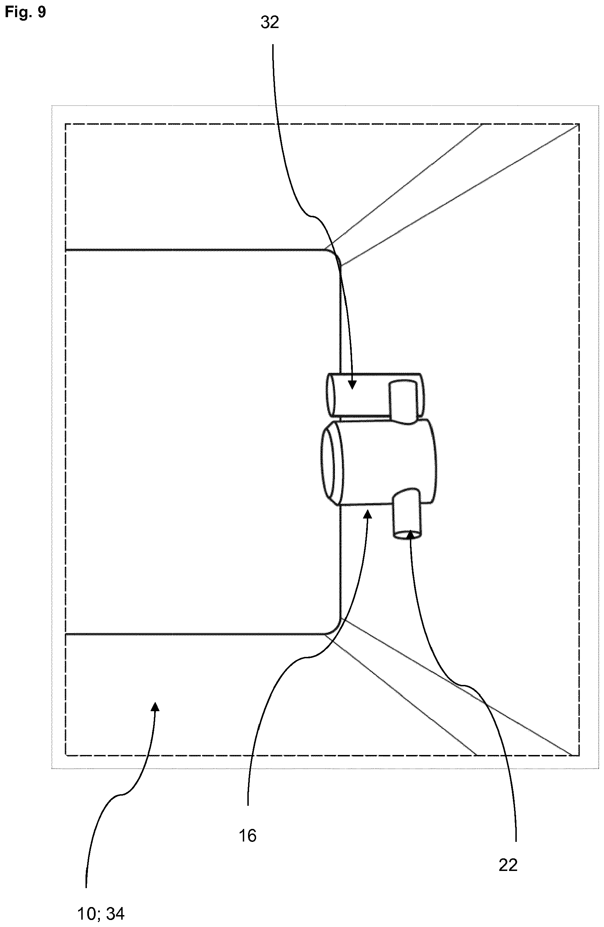

Zum Einsetzen des Befestigungsarmes (14) in den Greifkörper (10) wird der Verschlussbolzen (16) derart ausgerichtet, dass dieser mit den Querstiften (22) durch die Passnuten (24) des Aufnahmeloches (18) geführt wird. Dies erfolgt bevorzugt in einem Zustand, in welchem der Verschlussbolzen (16) nur teilweise in dem Befestigungsarm (14) eingeschraubt vorliegt. Und zwar ist der Verschlussbolzen (16) nur so weit in den Befestigungsarm (14) eingeschraubt, dass der Abstand zwischen den Querstiften (22) und dem Vorsprung des Befestigungsarmes (14) ausreichend groß, sodass bei dem Eindrücken des Befestigungsarmes (14) in den Greifkörper (10) durch das Aufnahmeloch (18) der vordere Teil des Bolzenschaftes (20) umfassend die Querstifte (22) im Innenraum des Greifkörpers (10) vorliegt. Wie in Figur 3B dargestellt kann zudem bevorzugt eine Federscheibe (28) zwischen den Querstiften (22) und dem Befestigungsarm (14) vorliegen. Durch Drehung des Befestigungsarmes (14) drehen sich die Querstifte (22) auf der Innenfläche des Mantels des Greifkörpers (34). Auf der Innenfläche des Mantels des Greifkörpers (34) liegt ein Arretierstift (32) vor. Dieser ragt in den Innenraum Greifkörpers (10), sodass die Querstifte (22) während der Rotation an dem Arretierstift (32) anschlagen. Dadurch wird die Weiterführung der Drehbewegung der Querstifte (22) verhindert und der Verschlussbolzen (16) in Bezug auf den Greifkörper (10) fixiert. Ein Weiterdrehen des Befestigungsarmes (14) in derselben Rotationsrichtung führt zu einem Eindrehen des Verschlussbolzens (16) umfassend ein Außendrehgewinde (30) in das Innendrehgewinde des Befestigungsarmes (14). Durch die Abstandsverkürzung zwischen den Querstiften (22) und dem Befestigungsarm (14) wird der Mantel zwischen diesen Bauteilen eingeklemmt, so dass die Schraubbewegung zu einer sicheren Montage des Befestigungsarmes (14) an dem Greifkörper (10) führt. In Figur 9 ist zu erkennen, wie die Querstifte (22) auf der Innenfläche des Mantels (34) eines quaderförmigen Greifkörpers (10) vorliegen und durch den Arretierstift (32) in einer Drehbewegung fixiert werden.

### Bezugszeichenliste

- 1: Handlauf
- 10: Greifkörper
- 12: Haltevorrichtung
- 14: Befestigungsarm
- 16: Verschlussbolzen
- 18: Aufnahmeloch
- 20: Bolzenschaft
- 22: Querstift
- 24: Passnut
- 26: Durchbohrungen
- 28: Federscheibe
- 30: Außendrehgewinde
- 32: Arretierstift
- 34: Innenfläche des Mantel des Greifkörpers
- 36: Montagevorrichtung für eine Wand

## Patentansprüche

1. Handlauf (1) umfassend einen Greifkörper (10), insbesondere einen zylinderförmigen Greifkörper (10), und eine Haltevorrichtung (12), wobei die Haltevorrichtung (12) einen Befestigungsarm (14) umfasst an dessen einem Ende ein Verschlussbolzen (16) angebracht vorliegt und der Greifkörper (10) ein Hohlkörper ist, welcher ein zu dem Verschlussbolzen (16) ausgerichtetes Aufnahmeloch (18) aufweist, und der Verschlussbolzen (16) einen Bolzenschaft (20) aufweist, wobei der Befestigungsarm (14) in den Greifkörper (10) durch Drehung fixierbar ist,
**dadurch gekennzeichnet, dass**
am Bolzenschaft (20) zwei Querstifte (22) angebracht vorliegen, das Aufnahmeloch (18) zwei Passnuten (24) für die Querstifte (22) sowie zwei Durchbohrungen (26) aufweist und der Verschlussbolzen (16) eine Federscheibe (28) aufweist, welche um den Bolzenschaft (20) zwischen den Querstiften (22) und dem Befestigungsarm (14) angebracht vorliegt, sodass die Querstifte (22) des Verschlussbolzens (16) nach Einsatz des Verschlussbolzens (16) in das Aufnahmeloch (18) durch Drehung des Befestigungsarmes (14) in den Durchbohrungen (26) einrasten.

2. Handlauf (1) umfassend einen Greifkörper (10), insbesondere einen quaderförmigen Greifkörper (10), und eine Haltevorrichtung (12), wobei die Haltevorrichtung (12) einen Befestigungsarm (14) umfasst an dessen einem Ende ein Verschlussbolzen (16) angebracht vorliegt und der Greifkörper (10) ein Hohlkörper ist, welcher ein zu dem Verschlussbolzen (16) ausgerichtetes Aufnahmeloch (18) aufweist, und der Verschlussbolzen (16) einen Bolzenschaft (20) aufweist, wobei der Befestigungsarm (14) in den Greifkörper (10) durch Drehung fixierbar ist;
**dadurch gekennzeichnet, dass**
der Bolzenschaft (20) an dem Ende, welcher dem Befestigungsarm (14) zugewandt ist, ein Außendrehgewinde (30) und der Befestigungsarm (14) ein dazu passend ausgestaltetes Innendrehgewinde aufweist, am Bolzenschaft (20) zwei Querstifte (22) angebracht vorliegen, das Aufnahmeloch (18) zwei Passnuten (24) für die Querstifte (22) aufweist und auf der Innenfläche des Mantels des Greifkörpers (34) ein Arretierstift (32) vorliegt.

3. Handlauf (1) gemäß Anspruch 1
**dadurch gekennzeichnet, dass**
der Greifkörper (10) ein zylinderförmiger Hohlkörper ist.

4. Handlauf (1) gemäß Anspruch 2
**dadurch gekennzeichnet, dass**
der Greifkörper (10) ein quaderförmiger Hohlkörper ist.

5. Handlauf (1) gemäß einem der vorherigen Ansprüche
**dadurch gekennzeichnet, dass**
die zwei Querstifte (22) seitlich diametral angebracht vorliegen.

6. Handlauf (1) gemäß einem der vorherigen Ansprüche
**dadurch gekennzeichnet, dass**
der Bolzenschaft (20) einen Durchmesser von 3 - 11 mm, die Querstifte (22) eine Länge von 1 - 5 mm und einen Durchmesser von 1 - 6 mm aufweisen.

7. Handlauf (1) gemäß einem der vorherigen Ansprüche
**dadurch gekennzeichnet, dass**
der Befestigungsarm (14) eine geradförmige Stange oder ein stangenförmiger Winkel ist und einem Durchmesser von 5 - 25 mm aufweist.

8. Handlauf (1) gemäß einem der vorherigen Ansprüche
**dadurch gekennzeichnet, dass**
der Handlauf (1) mindestens zwei Haltevorrichtungen (12) und der Greifkörper (10) mindestens zwei Aufnahmelöcher (18) aufweist.

9. Handlauf (1) gemäß einem der vorherigen Ansprüche
**dadurch gekennzeichnet, dass**
der Greifkörper (10) eine Querschnittsdimension von 2,5 - 10 cm aufweist.

10. Handlauf (1) gemäß einem der vorherigen Ansprüche, sofern abhängig von Anspruch 2
**dadurch gekennzeichnet, dass**
der Arretierstift (32) eine Länge von 1 - 5 mm und einen Durchmesser von 1 - 3 mm aufweist.

11. Handlauf (1) gemäß einem der vorherigen Ansprüche
**dadurch gekennzeichnet, dass**
der Greifkörper (10) und der Befestigungsarm (14) ein Material umfassen ausgewählt aus einer Gruppe umfassend Metallelemente, insbesondere Eisen, Aluminium oder Kupfer, und Metalllegierungen, insbesondere Bronze, Messing, oder Stahl, bevorzugt Edelstahl.

12. Handlauf (1) gemäß einem der vorherigen Ansprüche
**dadurch gekennzeichnet, dass**
der Verschlussbolzen (16) ein Material umfasst ausgewählt aus einer Gruppe umfassend Metallelemente, insbesondere Eisen, und Metalllegierungen, insbesondere Stahl, bevorzugt Edelstahl.

## Claims

1. A handrail (1) comprising a gripper (10), in particular a cylindrical gripper (10), and a holding bracket (12), wherein the holding bracket (12) comprises a fastening arm (14), at one end of which there is an attached locking bolt (16) and the gripper (10) is a hollow body which has a receiving hole (18) aligned with the locking bolt (16), and the locking bolt (16) having a bolt shaft (20), the fastening arm (14) being fixable in the gripper (10) by rotation,
**characterized in that**
there are two transverse pins (22) attached to the bolt shaft (20), the receiving hole (18) has two fitting grooves (24) for the transverse pins (22) and two boreholes (26),and the locking bolt (16) has a spring washer (28), which is mounted around the bolt shaft (20) between the transverse pins (22) and the fastening arm (14), so that the transverse pins (22) of the locking bolt (16), after insertion of the locking bolt (16) into the receiving hole (18), are secured by rotating the fastening arm (14) in the boreholes (26).

2. A handrail (1) comprising a gripper (10), in particular a cuboid-shaped gripper (10), and a holding bracket (12), the holding bracket (12) comprising a fastening arm (14) at one end of which there is attached a locking bolt (16), and the gripper (10) comprising a hollow body, which has a receiving hole (18) aligned with the locking bolt (16), and the locking bolt (16) having a bolt shaft (20), wherein the fastening arm (14) is inserted into the gripper (10) and fixable into place through rotation:
**characterized in that**
the bolt shaft (20) has an external rotary thread (30) at the end, which faces the fastening arm (14), and the fastening arm (14) has an internal rotary thread designed to match it, there are two transverse pins (22) attached on the bolt shaft (20), the receiving hole (18) has two fitting grooves (24) for the transverse pins (22) and there is a locking pin (32) on the inner surface of the casing of the gripper (34).

3. The handrail (1) according to Claim 1,
**characterized in that**
the gripper (10) is a cylindrical hollow body.

4. The handrail (1) according to Claim 2,
**characterized in that**
the gripper (10) is a cuboid hollow body.

5. The handrail (1) according to any one of the preceding claims,
**characterized in that**
the two transverse pins (22) are laterally diametrically mounted.

6. The handrail (1) according to any one of the preceding claims,
**characterized in that**
the bolt shaft (20) has a diameter of 3 - 11 mm, the transverse pins (22) have a length of 1 - 5 mm and a diameter of 1 - 6 mm.

7. The handrail (1) according to any one of the preceding claims,
**characterized in that**
the fastening arm (14) is a straight bar or a bar-shaped angle and has a diameter of 5 - 25 mm.

8. The handrail (1) according to any one of the preceding claims,
**characterized in that**
the handrail (1) has at least two holding brackets (12) and the gripper (10) has at least two receiving holes (18).

9. The handrail (1) according to any one of the preceding claims,
**characterized in that**
the gripper (10) has a cross-sectional dimension of 2.5 - 10 cm.

10. The handrail (1) according to any one of the preceding claims, if dependent on Claim 2,
**characterized in that**
the locking pin (32) has a length of 1 - 5 mm and a diameter of 1 - 3 mm.

11. The handrail (1) according to any one of the preceding claims,
**characterized in that**
the gripper (10) and the fastening arm (14) comprise a material selected from a group comprising metal elements, in particular iron, aluminum or copper, and metal alloys, in particular bronze, brass, or steel, preferably stainless steel.

12. The handrail (1) according to any one of the preceding claims,
**characterized in that**
the locking bolt (16) comprises a material selected from a group comprising metal elements, in particular iron and metal alloys, especially steel, preferably stainless steel.

## Revendications

1. Main courante (1) comprenant un corps de préhension (10), en particulier un corps de préhension cylindrique (10), et un dispositif de retenue (12), dans laquelle le dispositif de retenue (12) comprend un bras de fixation (14) à une extrémité duquel un boulon de fermeture (16) est présent monté et le corps de préhension (10) est un corps creux, lequel présente un trou de réception (18) orienté vers le boulon de fermeture (16), et le boulon de fermeture (16) présente une tige de boulon (20), dans laquelle le bras de fixation (14) peut être fixé dans le corps de préhension (10) par rotation,
**caractérisée en ce que**
deux broches transversales (22) sont présentes montées au niveau de la tige de boulon (20), le trou de réception (18) présente deux gorges de montage (24) pour les broches transversales (22) ainsi que deux perçages traversants (26) et le boulon de fermeture (16) présente un disque ressort (28), lequel est présent monté autour de la tige de boulon (20) entre les broches transversales (22) et le bras de fixation (14), de sorte que les broches transversales (22) du boulon de fermeture (16) s'enclenchent par rotation du bras de fixation (14) dans les perçages traversants (26) après insertion du boulon de fermeture (16) dans le trou de réception (18).

2. Main courante (1) comprenant un corps de préhension (10), en particulier un corps de préhension parallélépipédique (10), et un dispositif de retenue (12), dans laquelle le dispositif de retenue (12) comprend un bras de fixation (14) à une extrémité duquel un boulon de fermeture (16) est présent monté et le corps de préhension (10) est un corps creux, lequel présente un trou de réception (18) orienté vers le boulon de fermeture (16), et le boulon de fermeture (16) présente une tige de boulon (20), dans laquelle le bras de fixation (14) peut être fixé dans le corps de préhension (10) par rotation ;
**caractérisée en ce que**
la tige de boulon (20) présente à l'extrémité, qui est tournée vers le bras de fixation (14), un filetage rotatif extérieur (30) et le bras de fixation (14) présente un filetage rotatif intérieur réalisé de manière adaptée, deux broches transversales (22) sont présentes montées au niveau de la tige de boulon (20), le trou de réception (18) présente deux gorges de montage (24) pour les broches transversales (22) et une broche de blocage (32) est présente sur la surface intérieure de l'enveloppe du corps de préhension (34).

3. Main courante (1) selon la revendication 1,
**caractérisée en ce que**
le corps de préhension (10) est un corps creux cylindrique.

4. Main courante (1) selon la revendication 2,
**caractérisée en ce que**
le corps de préhension (10) est un corps creux parallélépipédique.

5. Main courante (1) selon l'une quelconque des revendications précédentes,
**caractérisée en ce que**
les deux broches transversales (22) sont présentes montées diamétralement sur le côté.

6. Main courante (1) selon l'une quelconque des revendications précédentes,
**caractérisée en ce que**
la tige de boulon (20) présente un diamètre de 3 - 11 mm, les broches transversales (22) présentent une longueur de 1 - 5 mm et un diamètre de 1 - 6 mm.

7. Main courante (1) selon l'une quelconque des revendications précédentes,
**caractérisée en ce que**
le bras de fixation (14) est une barre rectiligne ou une équerre en forme de barre et présente un diamètre de 5 - 25 mm.

8. Main courante (1) selon l'une quelconque des revendications précédentes,
**caractérisée en ce que**
la main courante (1) présente au moins deux dispositifs de retenue (12) et le corps de préhension (10) présente au moins deux trous de réception (18).

9. Main courante (1) selon l'une quelconque des revendications précédentes,
**caractérisée en ce que**
le corps de préhension (10) présente une dimension de section transversale de 2,5 - 10 cm.

10. Main courante (1) selon l'une quelconque des revendications précédentes, si dépendante de la revendication 2
**caractérisée en ce que**
la broche de blocage (32) présente une longueur de 1 - 5 mm et un diamètre de 1 - 3 mm.

11. Main courante (1) selon l'une quelconque des revendications précédentes,
**caractérisée en ce que**
le corps de préhension (10) et le bras de fixation (14) comprennent un matériau sélectionné dans un groupe comprenant des éléments métalliques, en particulier du fer, de l'aluminium ou du cuivre, et des alliages métalliques, en particulier du bronze, du laiton, ou de l'acier, de préférence de l'acier inoxydable.

12. Main courante (1) selon l'une quelconque des revendications précédentes,
**caractérisée en ce que**
le boulon de fermeture (16) comprend un matériau sélectionné dans un groupe comprenant des éléments métalliques, en particulier du fer, et des alliages métalliques, en particulier de l'acier, de préférence de l'acier inoxydable.
